(19) Europäisches Patentamt
European Patent Office
Office européen des brevets

(11) **EP 1 889 867 A1**

(12) **EUROPEAN PATENT APPLICATION**
published in accordance with Art. 153(4) EPC

(43) Date of publication:
**20.02.2008 Bulletin 2008/08**

(21) Application number: **06732650.4**

(22) Date of filing: **15.05.2006**

(51) Int Cl.:
*C08J 9/28* (2006.01)   *B32B 5/18* (2006.01)
*H01G 9/02* (2006.01)   *H01M 2/16* (2006.01)
*H01M 10/40* (2006.01)

(86) International application number:
**PCT/JP2006/310076**

(87) International publication number:
**WO 2006/123798 (23.11.2006 Gazette 2006/47)**

(84) Designated Contracting States:
**FR**

(30) Priority: **20.05.2005 JP 2005147665**

(71) Applicant: **Sumitomo Chemical Company, Limited
Tokyo 104-8260 (JP)**

(72) Inventors:
• **SATO, Hiroyuki
Ehime (JP)**

• **SHINOHARA, Yasuo
Ibaraki (JP)**
• **SUZUKI, Yutaka
Ibaraki (JP)**

(74) Representative: **Hubert, Philippe et al
Cabinet Beau de Loménie
158, rue de l'Université
75340 Paris Cédex 07 (FR)**

(54) **POROUS FILM AND MULTILAYER POROUS FILM**

(57)    There is provided a porous film, comprising a polymer having a thermal decomposition initiation temperature of 200°C or more and a raw material monomer thereof, wherein a ratio of the raw material monomer is 0.05% by weight or more and 5% by weight or less based on the total weight of the polymer and the raw material monomer; and a laminated porous film, wherein the porous film and a porous film containing a thermoplastic resin are laminated.

**EP 1 889 867 A1**

**Description**

TECHNICAL FIELD

The present invention relates to a porous film and a laminated porous film. More specifically, the invention relates to a porous film and a laminated porous film, used for a separator.

BACKGROUND ART

Porous films and laminated porous films are used as separators used for cells, capacitors and the like. A cell comprises electrodes such as a cathode and anode, an electrolytic solution and a separator. A separator is required to have a high heat resistance and a separator containing a polyimide resin as a main component has been proposed as a separator having a high heat resistance (Japanese Patent Laid-Open No. 62-37871).

DISCLOSURE OF THE INVENTION

However, cells and capacitors having conventional separators are insufficient in long-term storage stability.
An object of the present invention is to provide a porous film and a laminated porous film that can obtain a cell and a capacitor excellent in the long-term storage stability and give a separator having a high heat resistance.
The present inventors have diligently studied to solve the above problem, having led to the present invention.
That is, the present invention provides the following film, separator, cell and capacitor:

<1> A porous film, comprising a polymer having a thermal decomposition initiation temperature of 200°C or more and a raw material monomer thereof, wherein a ratio of the raw material monomer is 0.05% by weight or more and 5% by weight or less based on the total weight of the polymer and the raw material monomer.
<2> The above-described porous film, wherein the polymer having a thermal decomposition initiation temperature of 200°C or more is a nitrogen-containing aromatic polymer.
<3> The porous film described in <1> or <2> above, further comprising an organic powder and/or an inorganic powder.
<4> A laminated porous film, wherein the porous film described in any one of the above and a porous film containing a thermoplastic resin are laminated.
<5> The above described laminated porous film, wherein a temperature for making nonporous is less than 180°C.
<6> A separator comprising the porous film described in any one of the above.
<7> A separator, comprising the laminated porous film described in any one of the above.
<8> The separator described in any one of the above, wherein a porosity is 20% by volume or more and 90% by volume or less.
<9> The separator described in any one of the above, wherein a gas permeability by the Gurley method is 20 sec/ 100 cc or more and 2000 sec/100 cc or less.
<10> A cell, comprising the separator described in any one of the above.
<11> A capacitor, comprising the separator described in any one of the above.

BEST MODE FOR CARRYING OUT THE INVENTION

The present invention will be described in detail hereinafter.
The porous film of the present invention is characterized in that the porous film contains a polymer having a thermal decomposition initiation temperature of 200°C or more and a raw material monomer thereof, and that the ratio of the raw material monomer is 0.05% by weight or more and 5% by weight or less based on the total weight of the polymer and the raw material. The ratio of the raw material monomer is preferably 0.08% by weight or more and 1% by weight or less, more preferably 0.1% by weight or more and 0.5% by weight or less, based on the above total weight. If the ratio of the raw material monomer exceeds 5% by weight based on the above total weight, it is not preferable because the long-term storage stability of a cell and a capacitor having a separator comprising a porous film is liable to decrease. In addition, if the ratio of the raw material monomer is less than 0.05% by weight based on the above total weight, it is not preferable because the adhesion of the separator and the electrode is liable to be insufficient when a cell and a capacitor having a separator comprising a porous film is produced.
Examples of the polymer having a thermal decomposition initiation temperature of 200°C or more include, for example, oxygen-containing aromatic polymers such as polyethylene terephthalate, polybutylene terephthalate and polyethylene isophthalate, nitrogen-containing aromatic polymers as mentioned below, and the like. Polyethylene terephthalate is obtained by condensation polymerization of ethylene glycol and terephthalic acid, used as raw material monomers, polybutylene terephthalate is obtained by condensation polymerization of butylene glycol and terephthalic acid, used as raw material monomers, and polyethylene isophthalate is obtained by condensation polymerization of ethylene glycol and isophthalic acid, used as raw material monomers. Additionally, as the raw material monomer, terephthaloyl dichloride may be used in place of terephthalic acid or isophthaloyl dichloride may be used in place of isophthalic acid.

The thermal decomposition initiation temperature of these polymers is more preferably 220°C or more, still more preferably 300°C or more. If the thermal decomposition initiation temperature is less than 200°C, the use of a separator comprising the porous film of the present invention for a cell may not maintain insulation properties of the cell when a temperature within the cell rises due to cell short circuit or the like. Of the polymers having a thermal decomposition initiation temperature of 200°C or more, the following nitrogen-containing aromatic polymers are preferable from the viewpoint of operability.

Examples of the nitrogen-containing aromatic polymers having a separator comprising the porous film of the present invention preferably include aromatic polymers containing an amide-imide group, aromatic polymers containing an imide group, aromatic polymers containing an ester group and an amide group, in terms of improvement in the long-term storage stability of a cell and a capacitor. Of these polymers, aromatic polyamide-imides, aromatic polyimides and aromatic polyester amides are more preferable.

The number average molecular weight of the above nitrogen-containing aromatic polymer is 2000 or more, preferably 5000 or more and 50000 or less. If the number average molecular weight of the polymer is less than 2000, the strength of the porous film of the present invention may decreases, sometimes posing problems in stability of a cell and a capacitor having a separator comprising the porous film. In addition, if the number average molecular weight of the polymer exceeds 50000, the solubility property may be insufficient when the polymer is dissolved in a polar organic solvent described below.

Examples of the above aromatic polyamide-imides include polymers obtained by condensation polymerization of an aromatic dicarboxylic acid and an aromatic diisocyanate, used as raw material monomers and polymers obtained by condensation polymerization of an aromatic diacidic anhydride and an aromatic diisocyanate, used as raw material monomers. Specific examples of the aromatic dicarboxylic acid include isophthalic acid, terephthalic acid, and the like. Additionally, specific examples of the aromatic diacidic anhydride include trimellitic anhydride, and the like. Examples of the aromatic diisocyanate include 4,4'-diphenylmethane diisocyanate, 2,4-tolylene diisocyanate, 2,6-tolylene diisocyanate, o-tolylene diisocyanate, m-xylene diisocyanate, and the like.

Examples of the above aromatic polyimides include polymers obtained by condensation polymerization of an aromatic diacidic anhydride and diamine, used as raw material monomers. Specific examples of the aromatic diacidic anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, 3,3',4,4'-biphenyltetracarboxylic dianhydride, and the like. In addition, examples of the diamine include oxydianiline, p-phenylene diamine, benzophenone diamine, 3,3'-methylene dianiline, 3,3'-diaminobenzophenone, 3,3'-diaminobenzosulfone, and the like.

Examples of the above aromatic polyester amides include polymers include polymers obtained by condensation polymerization of an aromatic carboxylic acid chloride and an aromatic amine, used as raw material monomers and polymers obtained by condensation polymerization of an aromatic alcohol and an aromatic amine, used as raw material monomers.

The porous film of the present invention preferably further contains, for example, an organic powder including polymers as described later and/or an inorganic powder including metal salts as described later. In this case, the change of the amount of addition of an organic powder and/or an inorganic powder makes it possible to control the porosity of a porous film obtained. The particle diameters of the organic powder and inorganic powder are preferably 1.0 μm or less in terms of the average particle diameter of a primary particle from the viewpoint of maintenance of strength properties and smoothness of the porous film, preferably 0.01 μm or more from the viewpoint of operability. The amount of addition of the organic powder and/or inorganic powder is preferably 20% by weight or more and 95% by weight or less, more preferably 30% by weight or more and 91% by weight or less, based on the total weight of the porous film, from the viewpoint of maintenance of strength properties of the porous film. The shapes of the organic powder and/or inorganic powder include, for example, globular, rod shapes, and the like, and are preferably globular shapes.

Examples of the above organic powders include powders of organic substances such as, for example, homopolymers or copolymers of two or more kinds of styrene, vinyl ketone, acrylonitrile, methyl methacrylate, ethyl methacrylate, glycidyl methacrylate, glycidyl acrylate, methyl acrylate, and the like, fluorine resins such as polytetrafluoroethylene, tetrafluoroethylene-hexafluoropropylene copolymers, tetrafluoroethylene-ethylene copolymers and polyvinyliden fluoride; melamine resins; urea resins; polyolefin; polymethacrylate, and the like. The organic powders may be used alone or can also be used in combination of two or more kinds. Of these organic powders, polytetrafluoroethylene is preferred in terms of chemical stability.

Examples of the above inorganic powders include, for example, powders of inorganic substances such as, metal oxides, metal nitrides, metal carbides, metal hydroxides, carbonate salts, and sulfate salts, and specific examples thereof include powders of alumina, silica, titanium dioxide, calcium carbonate or the like. The inorganic powders may be used alone or can also be used in combination of two or more kinds. Of these inorganic powders, alumina is preferred in terms of chemical stability.

Moreover, the present invention is a laminated porous film, wherein the above porous film and a porous film containing a thermoplastic resin are laminated. As the thermoplastic resins, polyolefins, for example, polyethylene such as low-density polyethylene, high-density polyethylene, or linear polyethylene, or low-molecular weight waxes thereof, or polypropylene are suitably used. Additionally, these polyolefins can be used in combination of two or more kinds.

In the laminated porous film of the present invention, the temperature for making nonporous is preferably less than 180°C. In this case, a temperature for making nonporous refers to a temperature at which the pore of a laminated porous film is closed and thus, in a cell and a capacitor, ions and/or electrons cannot substantially move between electrodes.

Furthermore, a separator of the present invention is characterized by comprising the above porous film of the present invention or the above laminated porous film of the present invention.

The porosity of the separator of the present invention is preferably 20% by volume or more and 90% by volume or less, more preferably 30% by volume or more and 80% by volume or less. If the porosity is less than 20% by volume, the ion permeability and/or the impregnation of an electrolytic solution may decrease, whereby the performances such as the loading properties and cycling properties of the cell and capacitor obtained may decrease. In addition, if the porosity exceeds 90% by volume, the strength of the separator may decrease, whereby the insulation properties of the cell and capacitor obtained may not be maintained. The porosity can be determined by means of the method as described later.

The gas permeability of the separator of the present invention is preferably 20 sec/100 cc or more and 2000 sec/100 cc or less in terms of the gas permeability by the Gurley method. If the gas permeability is less than 20 sec/100 cc, the strength of the separator may be lowered, whereby the insulation properties of a cell and capacitor obtained may not be maintained. Additionally, if the gas permeability exceeds 2000 sec/100 cc, the ion permeability of the separator and/or the impregnation of an electrolytic solution may decrease, whereby performances such as the loading properties and cycling properties of the cell and capacitor obtained may decrease. The gas permeability by the Gurley method can be determined by the method as described later.

The thickness of the above separator is preferably 5 μm or more and 100 μm or less, more preferably 5 μm or more and 50 μm or less, still more preferably 5 μm or more and 30 μm or less. If the thickness is less than 5 μm, the strength of the separator is lowered, whereby the handling may become difficult.

In addition, if the thickness exceeds 100 μm, a volume increase in the separator is liable to make small the electric capacities of the cell and capacitor obtained.

A laminated porous film of the present invention may be one wherein at least one layer of the porous film of the present invention and at least one layer of a porous film containing a thermoplastic resin are contacted and laminated, and may be one wherein two or more layers of each of the layers are laminated.

Next, a method of producing the porous film of the present invention will be described with reference to an example of the production of a porous film that contains a nitrogen-containing aromatic polymer and a raw material monomer thereof.

A nitrogen-containing aromatic polymer in the present invention can be obtained by condensation polymerization of two or more kinds of the above raw material monomers. The raw material monomer contains impurities present in the raw material monomer. Examples of the impurities include 1) substances of degeneration in which the raw material monomer is altered by oxygen, moisture, or the like, 2) a raw material used when the raw material monomer is prepared, and the like. In the case where the impurities have no bonding portions of condensation polymerization, condensation polymerization of them does not occur, and they remain as the raw material monomer in the porous film obtained.

The amount of impurities in the raw material monomer is preferably 0.05% by weight or more and 5% by weight or less, more preferably 0.08% by weight or more and 1% by weight or less. Additionally, even in the case where the reactivity of condensation polymerization between raw material monomers is low, the raw material monomer does not react and remains in the porous film.

The number average polymerization degree of the nitrogen-containing aromatic polymer in the present invention can be controlled by the use molar ratio of one raw material monomer and the other raw material monomer used during condensation polymerization. At this time, one raw material monomer is preferably in a slightly excessive amount relative to the other raw material monomer. That is, the molar number of one raw material monomer is made to be excessive relative to the molar number of the other raw material monomer. This makes it possible to control the amount of a raw material monomer in a porous film and also to control the number average molecular weight. Theoretically, there is the relationship of the following equation (1) between a target number average molecular weight (n) and the use molar ratio (d). When the use molar ratio (d) is enlarged, the number average molecular weight (n) becomes small. As a result, the concentration of the raw material monomer in the polymer tends to be high. The use molar ratio is preferably 1.01 or more and 1.05 or less, more preferably 1.02 or more and 1.04 or less.

$$d = (n + 1)/n \qquad (1)$$

The porous film of the present invention is produced by, for example, the method including the steps (a) to (e) below.

(a) A nitrogen-containing aromatic polymer and a raw material monomer thereof are dissolved in a polar organic solvent to prepare a solution containing the nitrogen-containing aromatic polymer and the raw material monomer thereof.
(b) The solution obtained in the step (a) is applied onto the surface of a substrate to form a coated membrane.
(c) The nitrogen-containing aromatic polymer and the raw material monomer thereof from the coated membrane obtained in the step (b) are deposited to obtain a wet coated membrane.
(d) The wet coated membrane obtained in the step (c) is released from the substrate and the polar organic solvent contained in the wet coated membrane is removed.
(e) The coated membrane after removal of the polar organic solvent obtained in the step (d) is dried to obtain a porous film.
In the step (a), the concentration of the nitrogen-containing aromatic polymer and the raw material monomer thereof are preferably from 0.5% by weight to 80% by weight. If the concentration is less than 0.5% by weight, the strength of the obtained porous film may be insufficient, the insulation properties of the cell and the like obtained may not be maintained. When the concentration exceeds 80% by weight, the solution viscosity becomes high and the flowability is lost, whereby productivity such as coating is not preferred sometimes. Additionally, example of the polar organic solvents include, for example, polar amide solvents or polar urea solvents. Examples of the polar amide solvents include N,N-dimethylformamide, N,N-dimethylacetamide, N-methyl-2-pyrolidone, and the like. In addition, examples of the polar urea solvents include N,N,N',N'-tetramethylurea, and the like. Of these solvents, in terms of chemical stability, N-methyl-2-pyrolidone is preferred.
In the step (b), the solution obtained in the step (a) is applied onto the surface of a substrate such as a base film, steel belt, roll, or drum to form a coated membrane. As the base films, for example, polyethylene terephthalate, paper produced by release treatment of the surface, and the like are used. Additionally, as a steel belt, the one produced by mirror polishing of the surface thereof and having corrosion resistance is preferably used. Moreover, as a roll or drum, the one produced by mirror polishing of the surface thereof and having corrosion resistance is preferably used. Further, the coating methods include coating methods by means of , for example, a knife, blade, bar, gravure and die. Coating by a bar, knife or the like is simple and easy; however, industrially die coating with a structure in which the solution is not in contact with the external air is preferred.
In the step (c), the nitrogen-containing aromatic polymer and the raw material monomer thereof are deposited from the coated membrane obtained in the step (b) to obtain a wet coated membrane. As the methods of deposition, specifically, 1) and 2) below are preferred because the wet coated membrane becomes porous.

1) A method of obtaining a wet coated membrane by placing the coated membraneobtained in the step (b) preferably at a temperature of 20°C or more in an atmosphere controlled at a predetermined humidity, and then depositing a nitrogen-containing aromatic polymer and a raw material monomer thereof.
2) A method of obtaining a wet coated membarane by immersing the coated membrane obtained in the step (b) in a poor solvent (solvent in which the nitrogen-containing aromatic polymer cannot dissolve) and then depositing the nitrogen-containing aromatic polymer and the raw material monomer thereof.

Furthermore, the atmosphere controlled at a predetermined humidity in 1) above may be a dried atmosphere of a relative humidity of 5% or less, or may be a wet atmosphere of a relative humidity of 30% to 95%.
In the step (d), a polar organic solvent that is contained in the wet coated membrane obtained in the step (c) is removed. The removal methods specifically include 1') or 2') below.

1') A method of removing a polar organic solvent by contacting the wet coated membrane with a solvent such as water, an aqueous solution or an alcoholic solution capable of dissolving the above polar organic solvent.
2') A method of removing a polar organic solvent by heating the wet coated membrane.

In the method 1'), when water is used, ion exchanged water in which metal ions are reduced is preferably used. In the method 2' , the heating temperature is preferably less than the melting temperature or less than the decomposition temperature. The removal is preferably the complete removal of the polar organic solvent, and a portion of the polar organic solvent may remain. The method 1') is preferable since, in the step (a), inorganic salts contained in the polar organic solvent as additives and inorganic salts generated as by-products during condensation polymerization can be removed.

In the step (e), the wet coated membrane obtained in the step (d) is preferably dried at less than the melting temperature or less than the decomposition temperature to obtain a porous film of the present invention.

For the inclusion of an organic powder and/or inorganic powder in a porous film of the present invention, in the step (a), the above organic powder and/or inorganic powder is added to a solution containing a nitrogen-containing aromatic polymer and a raw material monomer thereof and may be dispersed therein. The apparatuses for dispersion include pressure dispersion machines (homogenizer, nanomizer), and the like.

Next, a method of producing the laminated porous film of the present invention will be described.

The methods capable of producing a porous film containing a thermoplastic resin include the method disclosed in Japanese Patent Laid-Open No. 2003-105120, and the like.

The laminated porous film of the present invention can be produced by means of a method including, for example, the steps of (f) to (j) below.

(f) A nitrogen-containing aromatic polymer and a raw material monomer thereof are dissolved in a polar organic solvent to prepare a solution containing the nitrogen-containing aromatic polymer and the raw material monomer.

(g) The solution obtained in the step (f) is applied onto the surface of a porous film containing a thermoplastic resin to form a coated membrane.

(h) The nitrogen-containing aromatic polymer and the raw material monomer thereof are deposited from the coated membrane obtained in the step (g) to form a wet coated membrane.

(i) A polar organic solvent contained in the wet coated membrane obtained in the step (h) is removed.

(j) A coated membrane after removal of the polar organic solvent obtained in the step (i) is dried to obtain a laminated porous film.

The step (f) can be carried out as in the step (a) above.

The step (g) can be carried out as in the step (b) above with the exception that the solution obtained in the step (f) is applied onto a porous film containing a thermoplastic resin.

The step (h) can be carried out as in the step (c) above.

The step (i) can be carried out as in the step (d) above.

The step (j) can be carried out as in the step (e) above.

For the inclusion of an organic powder and/or inorganic powder in a laminated porous film of the present invention, in the step (f), the above organic powder and/or inorganic powder is added to a solution containing a nitrogen-containing aromatic polymer and a raw material monomer thereof and may be dispersed therein. The apparatuses for dispersion include pressure dispersion machines (Gorlin homogenizer, nanomizer), and the like.

In addition, the present invention relates to a cell having the above separator of the present invention.

Next, a cell having the separator of the present invention will be described with reference to a lithium secondary cell as an example of the cell.

For a lithium secondary cell can be used, for example, a known technique as illustrated in Japanese Patent Laid-Open No. 2002-054394. That is, the lithium secondary cell can be produced by housing in a cell can an electrode group obtained by laminating and winding a cathode sheet produced by applying a cathode electrode mixture to a cathode collector, an anode sheet produced by applying an anode electrode mixture to an anode collector and the separator of the present invention, and then impregnating an electrolytic solution comprising a non-aqueous organic solvent containing an electrolyte.

The shapes of the above electrode group can include, for example, shapes to become a circle, ellipse, rectangle, rectangle having no corner, and the like, at the section obtained by cutting the electrode group in the vertical direction to the axis of winding. In addition, the shapes of the cell can include, for example, shapes such as a paper sheet, coin, cylinder and square.

As the above cathode sheet, normally, a sheet produced by applying a cathode electrode mixture containing a cathode active material, conductive material and setting agent to a cathode collector is used. The cathode electrode mixture material preferably contains a material capable of doping and dedoping a lithium ion as a cathode active material, a carbonaceous material as a conductive material, and a thermoplastic resin as a setting agent.

The above cathode active materials can specifically include lithium composite oxides containing at least one kind of the transition metals such as V, Mn, Fe, Co and Ni, preferably, in terms of a high average discharge voltage, composite oxides having as a parent body the $\alpha$-NaFeO$_2$ type structure such as lithium cobaltate, lithium nickelate and substances produced by substitution of a part of nickels of lithium nickelate by another element such as Mn, and composite oxides having as a mother body the spinel type structure such as a lithium manganese spinel.

The above setting agents can include thermoplastic resins, specifically, polyvinyliden fluoride, copolymers of vinyliden fluoride, polytetrafluoroethylene, copolymers of tetrafluoroethylene-hexafluoropropylne, copolymers of tetrafluoroethylene-perfluoroalkylvinyl ether, copolymers of ethylene-tetrafluoroethylene, copolymers of vinyliden fluoride-hexafluoropropylene-tetrafluoroethylene, thermoplastic polyimide, carboxymethyl cellulose, polyethylene, polypropylene, and the like.

The above conductive agents can include carbonaceous materials, specifically, natural graphite, artificial graphite, cokes, carbon black, and the like. Two or more kinds thereof can be mixed and used.

The above cathode collectors can include A1, stainless and the like, preferably A1 from the viewpoints of light weight, inexpensiveness and easy processability.

The methods of applying the above cathode electrode mixture to a cathode collector include a pressure molding method, a method of pasting a cathode electrode mixture by use of a solvent or the like and applying the resulting paste onto a cathode collector, and then pressing and crimping after drying, and the like.

As the above anode sheet, a sheet produced by applying to a collector an anode electrode mixture containing a material capable of doping/dedoping a lithium ion, or a lithium metal, lithium alloy, or the like can be used. The materials capable of doping/dedoping a lithium ion specifically include carbonaceous materials such as natural graphite, artificial graphite, cokes, carbon black, thermally decomposed carbons, carbon fibers and organic macromolecule compound-baked materials. Chalcogen compounds such as oxides and sulfides capable of carrying out doping/dedoping of a lithium ion at a voltage lower than that of a cathode can also be used. The carbonaceous materials preferably include carbonaceous materials having graphite such as natural graphite or artificial graphite as a main component in terms of high voltage evenness, low average discharge voltage and so forth. The shape of a carbonaceous material may adopt, for example, any one of a thin strip such as natural graphite, a globe such as a mesocarbon microbead, a fiber such as a graphitized carbon fiber, an aggregate of fine powders, or the like.

In the case where the above electrolytic solution does not contain ethylene carbonate as described later, the use of an anode electrode mixture containing polyethylene carbonate may preferably improve cycling properties of a cell obtained and large current discharge properties.

The above anode electrode mixture may contain, as required, a setting agent. The setting agents can include thermoplastic resins, specifically, polyvinyliden fluoride, copolymers of polyvinyliden fluoride, copolymers of vinyliden fluoride-hexafluoropropylene-tetrafluoroethylene, thermoplastic polyimide, carboxymethyl cellulose, polyethylene, polypropylene, and the like.

Examples of chalcogen compounds such as oxides and sulfides used as materials capable of carrying out doping/dedoping of a lithium ion contained in an anode electrode mixture include chalcogen compounds such as crystalline or amorphous oxides and sulfides mainly containing elements of Groups 13, 14 and 15 in the Periodic Table, specifically, amorphous compounds mainly containing a tin oxide, and the like. Thereto, as required, a carbonaceous material as a conductive material and a thermoplastic resin as a setting agent can also be added.

Examples of the anode collectors used for the above anode sheet can include Cu, Ni, stainless, and the like, and Cu is preferred in terms of being difficult to produce an alloy with lithium and easy in processability to a thin membrane.

The methods of applying an anode electrode mixture to the anode collector are the same as in the cathode and include a pressure molding method, a method of pasting an anode electrode mixture by use of a solvent or the like and applying the resulting paste onto a collector, and then pressing and crimping after drying, and the like.

As the above electrolytic solution, an electrolytic solution produced by, for example, dissolving a lithium salt in an organic solvent can be used. Examples of the lithium salts include $LiClO_4$, $LiPF_6$, $LiAsF_6$, $LiSbF_6$, $LiBF_6$, $LiBF_4$, $LiCF_3SO_3$, $LiN(SO_2CF_3)_2$, $LiC(SO_2CF_3)_3$, $Li_2B_{10}Cl_{10}$, lower aliphatic lithium carboxylate salts, $LiAlCl_4$, and the like. A mixture of two or more kinds thereof may be used. Of these, it is preferable to use, as a lithium salt, a salt that contains at least one kind selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, in which fluorines are contained.

Examples of the organic solvents using the above electrolytic solution can include, for example, carbonates such as propylene carbonate, ethylene carbonate, vinylene carbonate, dimethyl carbonate, diethyl carbonate, ethylmethyl carbonate, 4-trifluoromethyl-1,3-dioxolane-2-one and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran and 2-methyltetrahydrofuran; esters such as methyl formate, methyl acetate and γ-butyrolactone; nitriles such as acetonitrile and butyronitrile; amides such as N,N-dimethyl formamide and N,N-dimethyl acetamide; carbamates such as 3-methyl-2-oxazolidone; sulfur-containing compounds such as sulfolane, dimethyl sulfoxide and 1, 3-propanesultone, or compounds produced by introducing a fluorine substituent to the above organic solvent. Of these, two or more kinds can be used in combination. Of these, mixture solvents containing carbonates are preferable, and mixture solvents of cyclic carbonates and non-cyclic carbonates or mixture solvents of cyclic carbonates and ethers are more preferable. As the mixture solvents of cyclic carbonates and non-cyclic carbonates, in terms of a wide operation temperature range and excellent loading characteristics, and decomposition resistance when a graphite material such as natural graphite or artificial graphite is used as a material capable of doping/dedoping a lithium ion contained in an anode electrode mixture, a mixture solvent containing ethylene carbonate, dimethyl carbonate and ethylmethyl carbonate is preferred.

Examples of the cyclic carbonates include ethylene carbonate; examples of the non-cyclic carbonates include dimethyl carbonate and ethylmethyl carbonate.

Moreover, the present invention relates to a capacitor having the above separator of the present invention. A capacitor having the separator of the present invention can be produced by means of a known technique as disclosed in, for example, Japanese Patent Laid-Open No. 2000-106327.

An electric double-layer capacitor includes electrodes, a separator and electrolytic solution and is a device in which an electrolyte dissolved in an electrolytic solution is adsorbed on an electrode and in which electric energy is stored at the interface (electric double-layer) formed between the electrolyte and the electrode.

As the electrode, a carbonaceous material is used and activated carbon, carbon black, polyacene, or the like, can be used. In general, as the electrode is used activated carbon primarily having micro pores (fine pore diameter 20Å or less) that is obtained by carbonization and activation of a raw material such as a palm shell. The total fine pore volume of activated carbon is normally less than 0.95 ml/g, preferably 0.5 ml/g or more and 0.93 ml/g or less. The total fine pore volume is preferably less than 0.95 ml/g from the viewpoint of improvement of the electrostatic capacity per volume. Usually, the activated carbon is pulverized to an average particle diameter of 50 $\mu$m or less, preferably 30 $\mu$m or less, particularly preferably 10 $\mu$m or less. Pulverization of activated carbon can improve the bulk density of an electrode, thereby reducing the internal resistance.

In addition, activated carbon that rarely contains alkaline metal and alkaline earth metal components, e.g., activated carbon having a concentration of the metal components of 100 ppm or less, is suitably used as an electrode because the polarization due to the metal components is small and the activated carbon provides many electric double layers. Normally, the electrode further contains a binding agent, conducting agent and the like so as to be readily formed as an electrode.

As a method for producing an electrode, usually, a mixture containing activated carbon, a binding agent, a conducting agent and the like is molded on a collector. Concretely, for example, a method that a mixed slurry in which a solvent is added to activated carbon, a binding agent, a conducting agent and the like is applied onto a collector by a doctor blade method and the like, or impregnated into a collector and dried; a method that a sheet obtained by adding a solvent to activated carbon, a binding agent, a conducting agent and the like, kneading, molding and drying is jointed to a surface of a collector through a conductive adhesive and the like, pressed and dried by a thermal treatment; a method that a mixture comprising activated carbon, a binding agent, a conducting agent, a liquid lubricant and the like is molded on a collector, the liquid lubricant is removed, and a molded article in sheet shape is stretched in monoaxial or polyaxial direction; and the like are listed.

When the electrode is made to be a sheet shape, its thickness is about from 50 to 1000 $\mu$m.

The materials of the above collector used for an electrode for a capacitor include, for example, metal such as nickel, aluminum, titanium, copper, gold, silver, platinum, aluminum alloy or stainless, carbon material, materials formed by plasma spraying or arc spraying nickel, aluminum, zinc, copper, tin, lead or an alloy thereof onto an activated carbon fiber, and conductive films produced by dispersing a conducting agent in rubber or resin such as a styrene-ethylene-butylene-styrene copolymer (SEBS), and the like. In particular, aluminum is preferred because of its light weight, excellent conductivity and electrochemical stableness.

Examples of the above conducting agents used for an electrode for a capacitor include, for example, conductive carbons such as graphite, carbon black, acetylene black, Ketjen Black, activated carbon different from that of the present invention; graphite-based conductive agents such as natural graphite, thermally expansive graphite, scale-like graphite and expansive graphite; carbon fibers such as gas phase growth carbon fiber; metal fine particles or metal fibers of aluminum, nickel, copper, silver, gold, platinum and the like; conductive metal oxides such as ruthenium oxide or titanium oxide; conductive polymers such as polyaniline, polypyrrole, polythiophene, polyacetylene and polyacene.

Carbon black, acetylene black and Ketjen Black are particularly preferred in terms of effective improvement of conductivity in their few amounts.

The amount of blending of a conducting agent in an electrode is normally about from 5 to 50 parts by weight, preferably about from 10 to 30 parts by weight, based on 100 parts by weight of activated carbon.

Examples of the above binding agents used for an electrode for a capacitor include, for example, polymers of fluorine compounds, and examples of the fluorine compounds include, for example, fluorinated alkyl (1 to 18 carbon atoms) (meth)acrylate, perfluoroalkyl (meth)acrylate, perfluoroalkyl substituted alkyl (meth)acrylate, perfluoroxyalkyl (meth)acrylate, fluorinated alkyl (1 to 18 carbon atoms) crotonate, fluorinated alkyl (1 to 18 carbon atoms) malate and fumalate, fluorinated alkyl (1 to 18 carbon atoms) itaconate, fluorinated alkyl substituted olefin (about 2 to 10 carbon atoms, about 1 to 17 fluorine atoms), tetrafluoroethylene, trifluoroethylene, fluorinated vinylidene, hexafluoropropylene, and the like.

In addition thereto, examples of the binding agents include addition polymers of monomers containing an ethylene double bond not containing a fluorine atom, polysaccharides and derivatives thereof such as starch, methyl cellulose, carboxymethyl cellulose, hydroxymethyl cellulose, hydroxyethyl cellulose, hydroxypropyl cellulose, carboxymethylhydroxyethyl cellulose and nitrocellulose; phenol resins; melamine resins; polyurethane resins; urea resins;

polyimide resins; polyamideimide resins; petroleum pitch; coal pitch, and the like.

For binding agents, of these, polymers of fluorine compounds are preferred, and in particular polytetrafluoroethylene, which is a polymer of tetrafluoroethylene, is preferred. As a binding agent, a plurality of kinds of binding agents may be used.

The amount of blending of a binding agent in an electrode is normally about from 0.5 to 30 parts by weight, preferably about from 2 to 30 parts by weight, based on 100 parts by weight of activated carbon.

An electrolyte dissolved in an electrolytic solution for a capacitor is an inorganic electrolyte or organic electrolyte. Examples of the inorganic electrolytes include, for example, acids such as sulfuric acid, hydrochloric acid and perchloric acid, bases such as sodium hydroxide, potassium hydroxide, lithium hydroxide and tetraalkylammonium hydroxide, salts such as sodium chloride and sodium sulfate, and the like. For inorganic electrolytes, of these, an aqueous sulfuric acid solution is preferred since it is excellent in stability and low in corrosion properties to materials constituting an electric double-layer capacitor.

The concentration of the inorganic electrolyte is normally about from 0.2 to 5 mol (electrolyte) /L (electrolytic solution), preferably about from 1 to 2 mol (electrolyte)/L (electrolytic solution). If the concentration is from 0.2 to 5 mol/L, the ionic conductivity in an electrolytic solution can be ensured.

An inorganic electrolyte is normally mixed with water and used as an electrolytic solution.

Examples of the organic electrolytes include, for example, combinations of inorganic anions such as $BO_3^{3-}$, $F^-$, $PF_6^-$, $BF_4^-$, $AsF_6^-$, $SbF_6^-$, $ClO_4^-$, $AlF_4^-$, $AlCl_4^-$, $TaF_6^-$, $NbF_6^-$, $SiF_6^{2-}$, $CN^-$, $F(HF)_n^-$ (wherein n represents a numerical value of 1 or more and 4 or less), and the like and the organic cations to be described later, combinations of the organic cations to be described later and organic cations, and combinations of organic anions and inorganic cations such as lithium ions, sodium ions, potassium ions and hydrogen ions.

The organic cation is a cationic organic compound, and examples thereof include organic quaternary ammonium cations, organic quaternary phosphonium cations, and the like.

The organic quaternary ammonium cation is a quaternary ammonium cation produced by substitution of a hydrocarbon group selected from the group consisting of alkyl groups (1 to 20 carbon atoms), cycloalkyl groups (6 to 20 carbon atoms), aryl groups (6 to 20 carbon atoms) and aralkyl groups (7 to 20 carbon atoms) by a nitrogen atom, and an organic quaternary sulfonium cation is a quaternary sulfonium cation produced by substitution of a hydrocarbon group as mentioned above by a phosphorus atom.

To a substituted hydrocarbon group may be bonded a hydroxyl group, amino group, nitro group, cyano group, carboxyl group, ether group, aldehyde group or the like.

For the organic cations, of these, organic quaternary ammonium cations are preferred; of these, imidazolium cations are preferred, in particular 1-ethyl-3-methyl imidazolium ($EMI^+$) is preferred since an electrostatic volume per volume tends to increase.

An organic anion is an anion containing a hydrocarbon group that may have a substituent, and the examples thereof include anions selected from the group consisting of $N(SO_2R_f)^{2-}$, $C(SO_2R_f)^{2-}$, $R_fCOO^-$ and $R_fSO^{3-}$ ($R_f$ represents a perfluoroalkyl group having 1 to 12 carbon atoms), anions obtained by exclusion of an active hydrogen atom from the organic acids (carboxylic acids, organic sulfonic acids and organic phosphoric acids) or phenols, and the like.

For the anions, inorganic anions are preferred, in particular, $BF_4^-$, $AsF_6^-$ and $SbF_6^-$ are preferred, and of these, particularly, $BF_4^-$ is preferred because it tends to improve the electrostatic capacity.

The organic polar solvent contained in the electrolytic solution is a solvent having as a main component at least one kind selected from the group consisting of carbonates, lactones and sulfoxides, preferably a solvent having as a main component at least one kind selected from the group consisting of propylene carbonate, ethylene carbonate, butylene carbonate, sulfolane, 3-methylsulfolane, acetonitrile, dimethyl carbonate, ethylmethyl carbonate, γ-butyrolactone, ethylene glycol and diethyl carbonate.

Particularly preferred is a solvent having as a main component at least one kind selected from the group consisting of ethylene carbonate, propylene carbonate, γ-butyrolactone and sulfolane. Herein, "having as a main component" means that, of the solvents, the component compound occupies 50% by weight or more, preferably 70% by weight or more. As the content of such an organic polar solvent is large, the long-term durability and operation voltage of the capacitor can be improved.

An organic polar solvent dissolving an electrolyte may be a mixture of two or more different kinds of solvents.

The methods of producing a capacitor by use of an electrode for the above capacitor, an electrolytic solution, and the separator of the present invention can include, for example, a method of producing a capacitor that involves winding a pair of sheet electrodes via the separator of the present invention to fabricate an electrode group, and then impregnating an electrolytic solution in the electrode group and housing it in a cylindrical case with a bottom, and a method of producing a capacitor that involves alternately laminating the rectangular electrodes and rectangular separators of the present invention to fabricate an electrode group, and then impregnating an electrolytic solution in the electrode group and housing it in a cylindrical case with a bottom.

Next, the present invention will be described in more specifically by way of example; however, the invention is by no means limited to these examples. Additionally, testing and evaluation in examples and comparative examples are carried out in the following.

(1) Determination of Amount of Raw Material Monomer

A porous film obtained was dissolved in dimethylacetoamide, a solution containing a nitrogen-containing aromatic polymer and a raw material monomer thereof, in predetermined concentrations, was prepared, and the amount (% by weight) of the raw material monomer was determined by the calibration curve method by means of a gel permeation chromatography (GPC) measurement apparatus.

(2) Porosity

The sample of the porous film or laminated porous film obtained was cut to a square with a side length of 10 cm, and the weight W (g) and the thickness D (cm) were measured. The weight (Wi) of each layer in the sample was determined, and from Wi and the true specific gravity (g/cm$^3$) of material of each layer, the volume of each layer was determined to determine the porosity (volume %) from equation (2).

```
Porosity (volume %)= 100 x {1-(W1/true specific gravity 1 +

W2/true specific gravity 2 + … + Wn/true specific gravity n)/(10

x 10 x D)}   (2)
```

(3) Determination of Gas Permeability by Gurley Method

The sample of the porous film or laminated porous film obtained was measured by a digital timer Gurley densometer available from Yasuda Seiki seisakusho Ltd. in accordance with JIS P 8171.

(4) Thickness Determination

The thickness of the porous film or laminated porous film obtained was determined in accordance with JIS K 7130 (1992).

(5) Evaluation of Long-Term Storage Stability of Lithium Secondary Cell Produced by Use of Separator Obtained

(5-1) Fabrication of Cathode Sheet

Carboxymethyl cellulose, polytetrafluoroethylene, acetylene black, a lithium cobaltate powder of a cathode active substance and water were subjected to dispersion kneading to obtain paste of a cathode electrode mixture. The weight ratio of each component contained in this paste was carboxymethyl cellulose:polytetrafluoroethylene:acetylene black:lithium cobaltate powder:water= 0.75:4.55:2.7:92:45 by weight. The paste was applied to a predetermined portions of both faces of an Al foil having a thickness of 20 $\mu$m of a cathode collector and dried, subjected to roll press, and slitted to obtain a cathode sheet. The length of an Al foil of a portion having not applied thereon a cathode electrode mixture was 1.5 cm and an aluminum lead was subjected to resistance welding on the coating-free portion.

(5-2) Fabrication of Anode Sheet

Carboxymethyl cellulose, natural graphite, artificial graphite and water were subjected to dispersion kneading to obtain paste of an anode electrode mixture. The weight ratio of each component contained in this paste was carboxymethyl cellulose:natural graphite:artificial graphite:water= 2.0:58.8:39.2:122.8 by weight. The paste was applied to a predetermined portions of both faces of an Cu foil having a thickness of 12 $\mu$m of an anode collector and dried, subjected to roll press, and slitted to obtain an anode sheet. The length of a Cu foil of a portion having not applied thereon an anode electrode mixture was 1.5 cm and an aluminum lead was subjected to resistance welding on the coating-free portion.

(5-3) Fabrication of Cylindrical Cell

The cathode sheet, anode sheet (coating-free portion of the anode electrode agent: 30 cm) and separator thus obtained were laminated in the order of the cathode sheet, separator and anode sheet and such that the coating-free portion of the anode mixture was the outermost periphery and then the resulting laminate was wound out of one end to generate an electrode group.

The above electrode element was inserted into a cell can, a solution as non-aqueous electrolytic solution was impregnated thereinto, the solution being prepared by dissolution of LiPF$_6$ in a mixture solution of a volume ratio of ethylene carbonate:dimethyl carbonate:ethylmethyl carbonate being 16:10:74 such that the concentration of LiPF$_6$ was 1 mol/litter, and a cell lid also serving as a cathode terminal was placed thereon and sealed through a gasket to obtain a cylindrical cell having a 18650 size. In addition, where the laminated porous film of the present invention is used as the separator, the film was laminated such that the cathode sheet was in contact with the porous film side of the present invention and such that the anode sheet was in contact with the porous film side containing a thermoplastic resin.

(5-4) Testing Method

The cylindrical cell obtained as described above was subjected to a stipulated aging treatment such that initial characteristics appeared, and then the discharge capacity at 1C was measured, and the cell was fully charged at 4.2 V, and then stored in a thermostat at 60°C for four weeks. The cell taken out after four weeks was cooled to room temperature, and then the discharge capacity at 1 C was measured again. The percentage of this value relative to the value prior to the storage was defined as the recovery factor and was set to be an index of long-term storage stability.

(5-5) Adhesion Evaluation of Cathode Sheet and Separator

In a state of lamination of the cathode sheet and the separator, pressure was applied from the cathode sheet side and the maximum static friction force (kgf) generated by withdrawal of only the separator was measured, whereby the adhesion of the cathode sheet and separator was evaluated.

(6) Evaluation of Safety of Lithium Secondary Cell Produced from the Separator Obtained

(6-1) Fabrication of Cell

A cylindrical cell was fabricated by a method similar to the method described in the above long-term storage stability evaluation.

(6-2) Testing Method

As safety testing, the testing below was implemented. A 18650 cylindrical cell charged at a constant current and constant voltage at 4.3 V for three hours was immobilized on an exclusive mounting. A nail of $\phi$ 2.5 mm attached to a testing device of a nail stab in a hydraulic press type was fallen in the center of a wound group at a speed of 5 mm/sec to observe behavior when the nail was penetrated through the cell can.

Example 1 (Polyimide)

1. Preparation of Slurry for Coating

To a solution prepared by dissolution of 20 g of a substance obtained by condensation polymerization of 3,3', 4,4'-diphenylsulfonetetracarboxylic dianhydride (content of impurities 3.3% by weight) and 3,3'-diaminobenzophenone (content of impurities 3.8% by weight) in 80 g of N-methyl-2-pyrolidone was added 20 g of alumina fine particles (Alumina C, average particle diameter 0.013 $\mu$m, available from Nippon Aerosil Co., Ltd.) and the resulting material was mixed and treated three times by means of a nanomizer. The resulting slurry was filtrated with a 1000 mesh wire gauze, defoamed at reduced pressure to generate slurry A for coating.

2. Fabrication of a Laminated Porous Film

A PET film substrate having a thickness of 100 $\mu$m was wound onto a drum having a diameter of 550 mm and a length of 350 mm. A polyethylene porous film having a thickness of 16 $\mu$m was wound onto the PET film substrate. One side of the polyethylene porous film was immobilized on the drum with tape. On the other side was hung 0. 6 kg of a weight such that the load was uniformly applied thereon. Over the uppermost part of the drum was disposed in parallel a stainless coating bar having a diameter of 25 mm in such a way that the clearance therebetween was 0.01 mm. The drum was turned and stopped such that the end of the side of the polyethylene porous film that was immobilized with tape came to between the drum and coating bar. The drum was rotated at 0.5 rpm and slurry A for coating prepared above was applied onto the polyethylene porous film while slurry A was supplied onto the polyethylene porous film in front of the coating bar. The entire surface of the polyethylene porous film was coated and further left at 23°C at a humidity of 50% for 10 minutes while the drum was rotated to deposit the polyimide and a raw material monomer thereof. The PET film substrate of 100 $\mu$m and the film obtained by the deposition after applying slurry A for coating to the polyethylene porous film, in a state being combined, were taken out of the drum and immersed in ion exchanged water and then washed for 12 hours while ion exchanged water was flowed. After washing, the PET film substrate was taken, and the resulting wet coated film was sandwiched with polyester cloth from both sides and further sandwiched with aramid felt. The resulting film was placed on an aluminum flat plate having a thickness of 3 mm and a nylon film with a thickness of 0.1 mm was placed thereon and sealed with a sealing material therearound. While vacuuming the inside, the film was dried at 70°C for 6 hours to obtain a laminated porous film. The temperature for making nonporous the resulting laminated porous film was 140°C.

3. Fabrication of a Porous Film

A porous film was fabricated as in 2 above with the exception that the polyethylene porous film was not wound and the slurry for coating was applied onto the PET film substrate. The resulting porous film was dissolved in dimethylacetamide and the alumina was centrifugation removed and then the amount of raw material monomer in the resulting solution was determined to be 3% by weight. In addition, the thermal decomposition temperature of the resulting porous film was 380°C.

4. Evaluation of the Separator

The separator composed of the resulting laminated porous film showed a thickness of 22 $\mu$m, a porosity of 45% by volume, and a gas permeability of 720 sec/100 cc. In addition, a cylindrical lithium secondary cell was fabricated by use of the separator and its long-term storage stability was determined, with a recovery factor being 88.3%.
Moreover, the safety testing of the cell was carried out. When the nail was penetrated, the temperature was slowly increased over 5 minutes or more until reaching the maximum temperature.

5. Adhesion with the Electrode

The adhesion of the cathode sheet and separator was determined, with the maximum static friction force being 1.0 kgf.

Example 2 (Polyamideimide)

1. Preparation of Slurry for Coating

To a solution prepared by dissolution of 2 g of a substance obtained by condensation polymerization of trimellitic anhydride (content of impurities 0.31% by weight) and 4,4'-diphenylmethanediisocyanate (content of impurities 0.37% by weight) in 98 g of N-methyl-2-pyrolidone was added 10 g of alumina fine particles (Alumina C, average particle diameter 0.013 $\mu$m, available from Nippon Aerosil Co., Ltd.) and the resulting material was mixed and treated three times by means of a nanomizer. The resulting slurry was filtrated with a 1000 mesh wire gauze, defoamed at reduced pressure to generate slurry B for coating.

2. Fabrication of a Laminated Porous Film

A laminated porous film was obtained as in 2 of Example 1 with the exception that the stainless coating bar and drum were placed in parallel such that the clearance therebetween was 0.015 mm and slurry B for coating was used. The temperature for making nonporous the resulting laminated porous film was 140°C.

3. Fabrication of a Porous Film

A porous film was fabricated as in 2 above with the exception that the polyethylene porous film was not wound and the slurry for coating was applied onto the PET film substrate. The resulting porous film was dissolved in dimethylacetamide and the alumina was centrifugation removed and then the amount of raw material monomer in the resulting solution was determined to be 0.3% by weight. In addition, the thermal decomposition temperature of the resulting porous film was 380°C.

4. Evaluation of the Separator

The separator composed of the resulting laminated porous film showed a thickness of 21 $\mu$m, a porosity of 50% by volume, and a gas permeability of 680 sec/100 cc. In addition, a cylindrical lithium secondary cell was fabricated by use of the separator, and its long-term storage stability was determined, with a recovery factor being 91.0%. Moreover, the safety testing of the cell was carried out. When the nail was penetrated, the temperature was slowly increased over 5 minutes or more until reaching the maximum temperature.

5. Adhesion with the Electrode

The adhesion of the cathode sheet and separator was determined, with the maximum static friction force being 0.9 kgf.

Comparative Example 1 (Polyimide)

1. Preparation of Slurry for Coating

To a solution prepared by dissolution of 20 g of a substance obtained by condensation polymerization of 3,3', 4,4'-diphenylsulfonetetracarboxylic dianhydride (content of impurities 8.8% by weight) and 3,3'-diaminobenzophenone (content of impurities 9.2% by weight) in 80 g of N-methyl-2-pyrolidone was added 20 g of alumina fine particles (Alumina C, average particle diameter 0.013 $\mu$m, available from Nippon Aerosil Co., Ltd.) and the resulting material was mixed and treated three times by means of a nanomizer. The resulting slurry was filtrated with a 1000 mesh wire gauze, defoamed at reduced pressure to generate slurry C for coating.

2. Fabrication of a Laminated Porous Film

A laminated porous film was obtained as in 2 of Example 1 with the exception that slurry C for coating was used. The temperature for making nonporous the resulting laminated porous film was 140°C.

3. Fabrication of a Porous Film

A porous film was fabricated as in 2 above with the exception that the polyethylene porous film was not wound and the slurry for coating was applied onto the PET film substrate. The resulting porous film was dissolved in dimethylacetamide and the alumina was centrifugation removed and then the weight of raw material monomer in the resulting solution was determined to be 8% by weight. In addition, the thermal decomposition temperature of the resulting porous film was 350°C.

4. Evaluation of the Separator

The separator composed of the resulting laminated porous film showed a thickness of 22 $\mu$m, a porosity of 50% by volume, and a gas permeability of 700 sec/100 cc. In addition, a cylindrical lithium secondary cell was fabricated by use of the separator, and its long-term storage stability was determined, with a recovery factor being 75.5%.

5. Adhesion with the Electrode

The adhesion of the cathode sheet and separator was determined, with the maximum static friction force being 1.1 kgf.

Comparative Example 2 (Polyimide)

1. Preparation of Slurry for Coating

To a solution prepared by dissolution of 20 g of a substance obtained by condensation polymerization of 3,3', 4,4'-diphenylsulfonetetracarboxylic dianhydride (content of impurities 0.04% by weight) and 3,3'-diaminobenzophenone (content of impurities 0.02% by weight) in 80 g of N-methyl-2-pyrolidone was added 20 g of alumina fine particles (Alumina C, average particle diameter 0.013 $\mu$m, available from Nippon Aerosil Co., Ltd.) and the resulting material was mixed and treated three times by means of a nanomizer. The resulting slurry was filtrated with a 1000 mesh wire gauze, defoamed at reduced pressure to generate slurry D for coating.

2. Fabrication of a Laminated Porous Film

A laminated porous film was obtained as in 2 of Example 1 with the exception that slurry D for coating was used. The temperature for making nonporous the resulting laminated porous film was 140°C.

3. Fabrication of a Porous Film

A porous film was fabricated as in 2 above with the exception that the polyethylene porous film was not wound and the slurry for coating was applied onto the PET film substrate. The resulting porous film was dissolved in dimethylacetamide and the alumina was centrifugation removed and then the weight of raw material monomer in the resulting solution was determined to be 0.01% by weight. In addition, the thermal decomposition temperature of the resulting porous film was 350°C.

4. Evaluation of the Separator

The separator composed of the resulting laminated porous film showed a thickness of 22 $\mu$m, a porosity of 50% by volume, and a gas permeability of 650 sec/100 cc. In addition, a cylindrical lithium secondary cell was fabricated by use of the separator, and its long-term storage stability was determined, with a recovery factor being 89.0%.

5. Adhesion with the Electrode

The adhesion of the cathode sheet and separator was determined, with the maximum static friction force being 0.4 kgf.

The cell and capacitor obtained by use of the separator comprising the porous film and the separator comprising the laminated porous film, of the present invention, are excellent in long-term storage stability, so the present invention is extremely industrially useful.

**Claims**

1.   A porous film, comprising a polymer having a thermal decomposition initiation temperature of 200°C or more and a raw material monomer thereof, wherein a ratio of the raw material monomer is 0.05% by weight or more and 5% by weight or less based on the total weight of the polymer and the raw material monomer.

2.   The porous film according to Claim 1, wherein the polymer having a thermal decomposition initiation temperature of 200°C or more is a nitrogen-containing aromatic polymer.

3.   The porous film according to Claim 1, further comprising an organic powder and/or an inorganic powder.

4.   A laminated porous film, wherein the porous film of any one of Claims 1 to 3 and a porous film containing a thermoplastic resin are laminated.

5.   The laminated porous film according to Claim 4, wherein a temperature for making nonporous is less than 180°C.

6.   A separator comprising the porous film of any one of Claims 1 to 3.

7.   A separator, comprising the laminated porous film of Claim 4.

8.   The separator according to Claim 6, wherein a porosity is 20% by volume or more and 90% by volume or less.

9.   The separator according to Claim 6, wherein a gas permeability by the Gurley method is 20 sec/100 cc or more and 2000 sec/100 cc or less.

10.   A cell, comprising the separator of Claim 6.

11.   A capacitor, comprising the separator of Claim 6.

**EP 1 889 867 A1**

<div align="center">

**INTERNATIONAL SEARCH REPORT**

</div>

| | International application No. |
|---|---|
| | PCT/JP2006/310076 |

A. CLASSIFICATION OF SUBJECT MATTER
*C08J9/28*(2006.01)i, *B32B5/18*(2006.01)i, *H01G9/02*(2006.01)i, *H01M2/16*
(2006.01)i, *H01M10/40*(2006.01)n

According to International Patent Classification (IPC) or to both national classification and IPC

B. FIELDS SEARCHED

Minimum documentation searched (classification system followed by classification symbols)
C08J9/00-9/42, B32B5/18, H01G9/02, H01M2/16, H01M10/40

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2001-64433 A  (Dainippon Ink And Chemicals,<br>Inc.),<br>13 March, 2001 (13.03.01),<br>Claims; Par. Nos. [0038], [0058], [0071],<br>[0085], [0110]<br>(Family: none) | 1,3-4<br>2,5-11 |
| A | JP 5-247245 A  (Mitsui Toatsu Chemicals, Inc.),<br>24 September, 1993 (24.09.93),<br>Claims; Par. Nos. [0018], [0025] to [0033]<br>& EP 510998 A2          & US 5340646 A | 1-11 |
| A | JP 2003-242954 A  (TDK Corp.),<br>29 August, 2003 (29.08.03),<br>Claims; Par. Nos. [0024] to [0026]<br>(Family: none) | 1-11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 July, 2006 (19.07.06) | Date of mailing of the international search report<br>    01 August, 2006 (01.08.06) |
|---|---|
| Name and mailing address of the ISA/<br>    Japanese Patent Office | Authorized officer |
| Facsimile No. | Telephone No. |

Form PCT/ISA/210 (second sheet) (April 2005)

<div align="center">

15

</div>

**INTERNATIONAL SEARCH REPORT**

International application No.

PCT/JP2006/310076

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-63684 A (Mitsubishi Paper Mills Ltd.), 10 March, 2005 (10.03.05), Claims; Par. No. [0082] (Family: none) | 1-11 |
| A | JP 55-48224 A (Asahi Chemical Industry Co., Ltd.), 05 April, 1980 (05.04.80), Claims (Family: none) | 1-11 |
| P,A | JP 2005-268401 A (Mitsubishi Paper Mills Ltd.), 29 September, 2005 (29.09.05), Claims; Par. No. [0059] (Family: none) | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62037871 A
- JP 2003105120 A
- JP 2002054394 A
- JP 2000106327 A